# EUROPEAN PATENT SPECIFICATION

(11) **EP 3 344 472 B1**
(45) Date of publication and mention of the grant of the patent: **27.04.2022**
(21) Application number: 16797983.0
(22) Date of filing: 01.09.2016
(51) Int. Cl.: B60B 19/04, B60B 21/06, B60B 25/00, B60B 25/02, B60B 27/02

(54) **A FOLDABLE WHEEL AND VEHICLES EQUIPPED WITH SUCH A WHEEL**
KLAPPRAD UND MIT SOLCH EINEM RAD AUSGESTATTETE FAHRZEUGE
ROUE PLIABLE ET VÉHICULES ÉQUIPÉS D'UNE TELLE ROUE

(30) Priority: 03.09.2015 IT UB20153374
(43) Date of publication of application: 11.07.2018
(73) Proprietor: Mocellin, Andrea, 36020 San Nazario (VI) (IT)
(72) Inventor: Mocellin, Andrea, 36020 San Nazario (VI) (IT)
(74) Representative: Buzzi, Franco
(86) International application number: PCT/IB2016/055241
(87) International publication number: WO 2017/037651

(56) References cited:
- EP-A1- 0 705 629
- CN-A- 102 991 267
- CN-A- 103 963 557
- DE-A1-102011 103 205
- US-A1- 2012 032 497
- US-A1- 2015 084 398

## Description

### Field of the invention

The present invention regards foldable or collapsible wheels comprising a rim with rubberised sectors that can be configured, starting from an extended condition for forming the rim, in a collapsed condition for minimum overall dimension of the wheel.

### State of the prior art

Collapsible wheels are described and illustrated for example in documents US-8371659, US-8833864, US-2012/0032497, US-2014/0097666 and US-2015/0084398.

Foldable wheels thus made can advantageously be used, for example, for equipping foldable bicycles with the aim of reducing overall the dimensions thereof and facilitating transportation and putting it away when not being used.

The foldable wheel described in document US-2015/0084398 corresponds to the pre-characterised part of claim 1: it comprises a double hub and spokes which pivotly connect each hub with the sectors of the rim. The spokes have a fixed length and the hubs can be displaced between an approached condition, corresponding to the extended condition of the sectors in which the rim is made, and a spaced condition in which the spokes extend substantially parallel to the wheel axis and the sectors of the rim are folded.

This prior art solution reveals several drawbacks: firstly, the wheel, even in the collapsed configuration, has a considerable radial overall dimension due to the fact that the folded sectors of the rim are arranged around the spokes according to two axially spaced circumferential groups distinct from each other. Secondly, the wheel is formed by a large number of components and a plurality of articulations between the components which, besides complicating the structure and the manufacturing, also imply a considerable weight and ensuing challenges not only when it comes to moving the wheel in collapsed condition but also during the use thereof in the extended condition for example with a bicycle, due to a difficult manoeuvrability. A further drawback of this prior art collapsible wheel regards the system for locking the sectors of the wheel by the spokes in the extended condition, revealing poor resistance to impacts and thus poorly reliable in use.

Document CN-103963557A describes a collapsible wheel comprising a rim with segments, foldable rods and a central shaft suitable to be folded and unfolded.

### Summary of the invention

The object of the present invention is to overcome the aforementioned drawbacks and such object is attained thanks to a foldable wheel of the type defined in the pre-characterising part of claim 1, whose peculiar characteristic resides in that the spokes are pivoted to the hubs substantially on the wheel axis and in that in the collapsed condition the sectors of the rim extend longitudinally between the two hubs.

The pivoting of the spokes around the wheel axis enables, contrary to the case of the prior art wheel mentioned in document US-2015/0084398 in which the spokes are pivoted at the peripheries of the hubs, considerably reducing the overall radial dimensions of the wheel in the rim collapsed condition, due to the longitudinal or axial arrangement of the sectors of the rim in the collapsed condition. In addition, such arrangement advantageously enables the folded wheel to assume a general roller-like configuration due to which it can for example be dragged on the ground rolling, thus not necessarily lifted for transportation thereof.

This advantage is further amplified by the fact that, according to another characteristic of the invention, the two hubs are predisposed to receive respective lateral rollers, for example of the omni-directional type. This enables the folded wheel to be profitably used in several applications for equipping vehicles of various kinds and types such as for example trolleys, strollers, wheelchairs, scooters, trolley bags, etc.

The foldable wheel according to the invention comprises an axially extensible and contractible central shaft carrying the two hubs, and the spokes are configured in groups in which each group includes a first spoke which pivotly connects a hub with a sector of the rim, and a second spoke which pivotly interconnects the other hub with said sector of the rim and it is pivoted to the first spoke in a scissor-like fashion.

In a variant, the central shaft is formed by two separable axial parts.

The sectors of the rim are preferably, though not necessarily, six.

### Brief description of the drawings

The invention will now be described in detail, purely by way of non-limiting example, with reference to the attached drawings, wherein:
- figure 1 is a lateral elevational view of a foldable wheel according to the invention, in the extended condition,
- figure 2 is a plan view of figure 1,
- figure 3 is a view analogous to figure 1 showing the wheel in the collapsed condition,
- figure 4 is a plan view of figure 3,
- figure 5 is a perspective view of the wheel in the extended condition,
- figure 6 is a view analogous to figure 5 showing the wheel when passing from the extended condition to the collapsed condition,
- figure 7 is a perspective view of the wheel in the collapsed condition,
- figure 8 is a diametrical sectional view of the wheel in the extended condition, in which the rim was omitted for illustration simplicity purposes,
- figure 9 is a view analogous to figure 8 when passing from the extended condition to the collapsed condition,
- figure 10 is a view analogous to figures 8 and 9 showing the collapsed condition,
- figure 11 is a perspective view and in larger scale showing a detail of the wheel when passing from the collapsed condition to the extended condition,
- figures 12 and 13 are further perspective views and in larger detail analogous to figure 11,
- figure 14 is a perspective view of the wheel in the extended condition in which all sectors of the rim except one were removed for illustration simplicity purposes,
- figures 15 and 16 are two perspective views of the wheel in collapsed condition to which auxiliary rolling elements are applied,
- figures 17 to 26 schematically exemplify various examples of application of the foldable wheel according to the invention,
- figure 27 is a perspective view of a variant of the wheel in the extended condition,
- figure 28 shows the wheel of figure 27 in a solely partly collapsed condition, and
- figure 29 shows a part of figure 28 in larger detail from a different angle.

### Detailed description of the invention

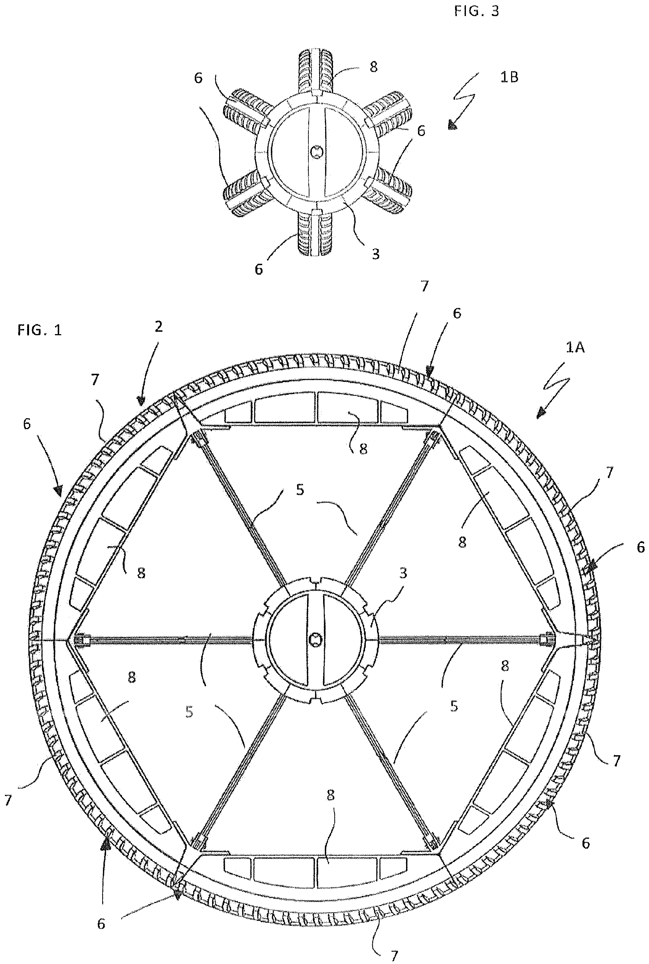

Initially with reference to figures 1, 2, 8 and 14 the foldable wheel according to the invention, indicated with 1A in the extended condition of normal use thereof, essentially comprises a rubberised rim 2, a pair of coaxial hubs 3, 4 and a series of spokes generally indicated with 5 which pivotly interconnect each hub 3, 4 with the rim 2.

The rim 2 is in turn formed by a series of sectors 6 each of which includes an arched rubber portion 7 carried by a rigid support 8 which, in the extended condition of the wheel 1A, extends according to an edge of the rim 2.

In the case of the illustrated example, the sectors 6 are six, same case applying to the group of spokes 5. However, within the present invention there may be provided for solutions with a greater number of sectors, with the aim of attaining greater compactness of the wheel in the folded condition thereof.

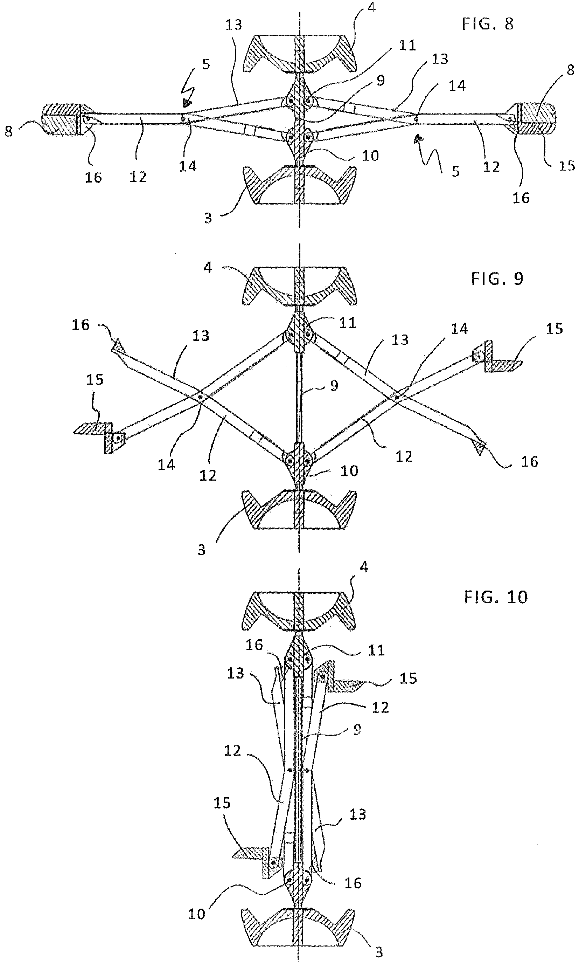

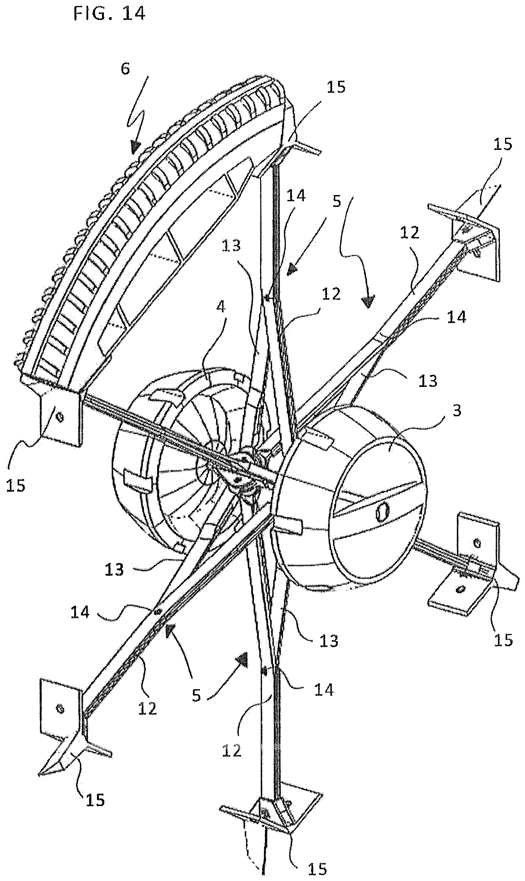

As observable in larger detail in figures 8 and 14, the hubs 3, 4 are mounted on a central shaft 9, axially extensible and contractible for example in a telescopic fashion, and the spokes 5 are pivoted to respective support appendages 10, 11 of the hubs 3, 4, substantially on the wheel axis defined by the shaft 9.

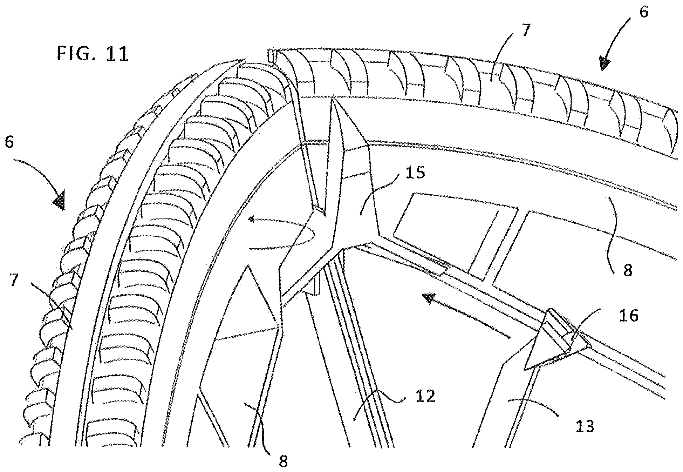

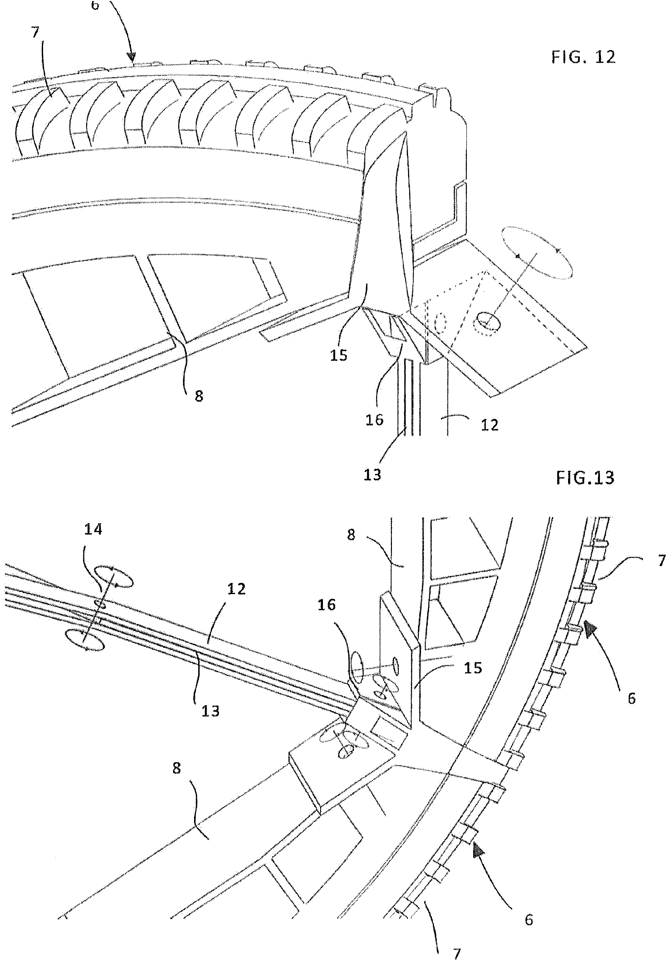

As better observable in figures 8, 9 and 14 each group of spokes 5 comprises a first spoke 12 whose radially internal end is pivoted to the support 10 of the hub 3 and a spoke 13 whose internal end is pivoted to the support 11 of the hub 4. The spokes 12 and 13 are centrally pivoted to each other in a scissor-like fashion 14, and carry, at the respective radially external ends, locking members 15, 16 shaped as represented in detail in figures 11-13 so as to cooperate with the ends of the supports 8 of the sectors 6 of the rim 2. In particular, the members 15 are configured to as to enable the rotation of the sectors 6 from closed to open with two distinct rotational axes for the respective contiguous sectors 6, as illustrated in figure 13, besides rotating on the relative spoke 13 so as to maintain a parallelism condition with the corresponding hub when unfolding the wheel. The members 16 act in a manner such to stably and rigidly hold the rim 2 in the extended condition.

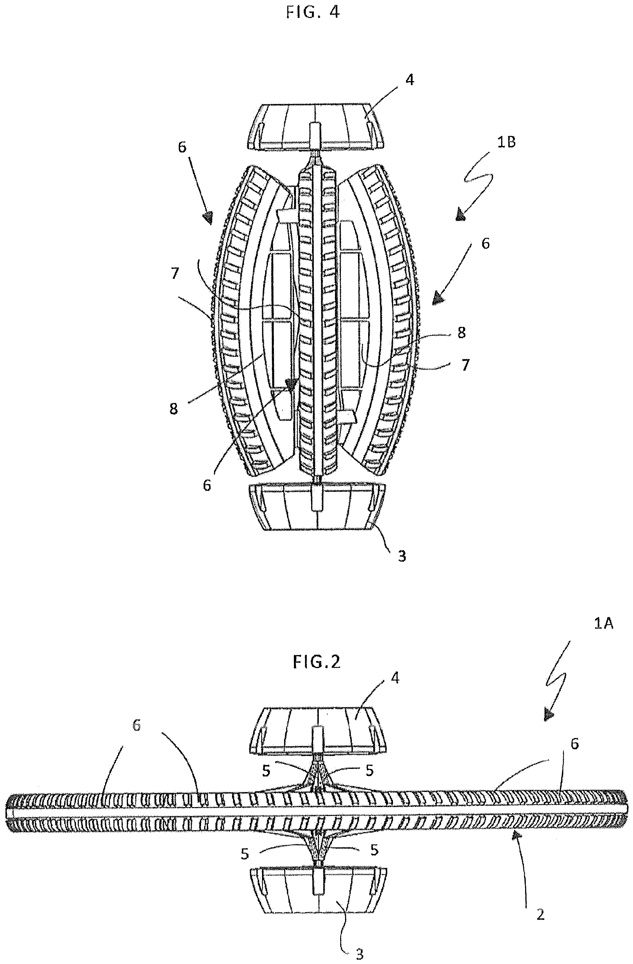

Figures 3 and 4 represent the foldable wheel in the collapsed condition, indicated with 1B: in such configuration, the hubs 3, 4 are axially spaced from each other, the groups of spokes 5 extend substantially axially along the central shaft 9, adjacent with respect thereto, and the sectors 6 of the wheel 2 also extend longitudinally between the two hubs 3, 4, externally to the groups of rays 5.

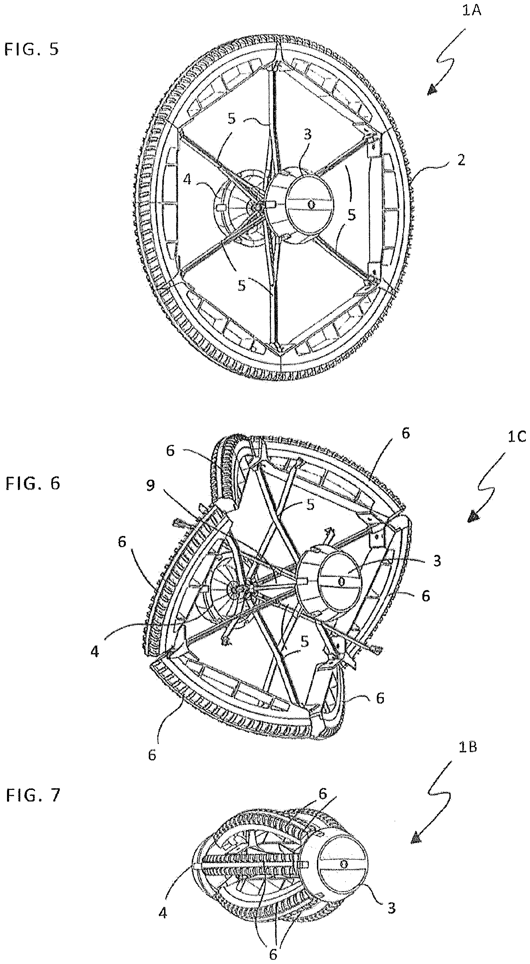

Figures 5, 6, 7 and 8, 9, 10 exemplify the passage of the wheel from the extended condition 1A (figures 5 and 8) to the collapsed configuration 1B (figures 7 and 10) passing through an intermediate configuration 1C (figures 6 and 9), and vice versa, as follows. After unfolding the locking elements 15, 16 from the sectors 6 of the rim 2, the hubs 3, 4 are mutually axially moved apart by the extension of the central shaft 9, while the spokes 12, 13 of each group 5 simultaneously rotate with respect to each other in a scissor-like fashion (figures 6, 9) until they are arranged substantially parallel to the central shaft 9 (figures 7 and 10).

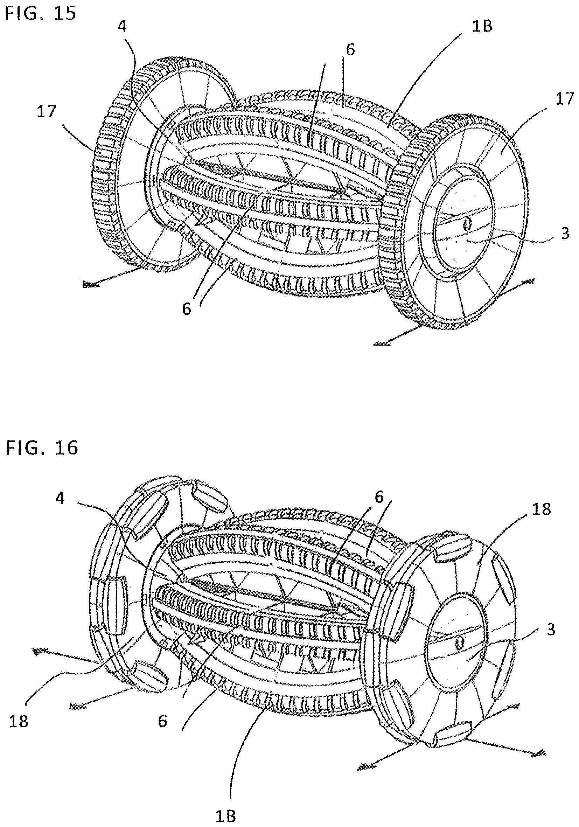

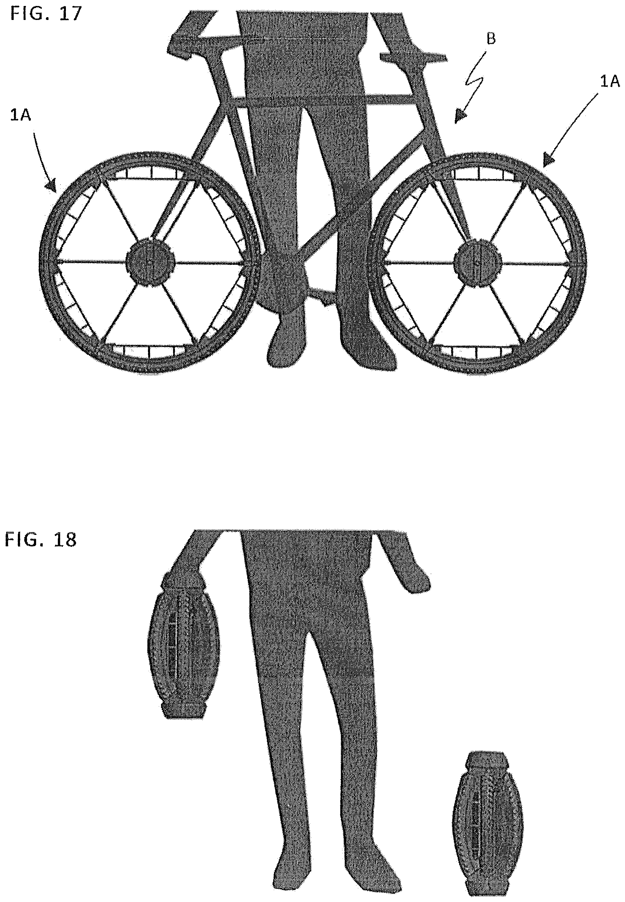

As observable in the collapsed condition of figures 3, 4 and 7, the wheel 1B has an extremely small and compact overall dimension which facilitates manual transportation thereof, for example as represented in figure 18. However, given that the collapsed wheel 1B is evidently generally roller-shaped, it may also be rolled on the ground without necessarily having to be lifted. For this purpose, the invention provides for possible use of a pair of auxiliary rollers 17, represented in figure 15, selectively applicable to the hubs 3, 4. The rollers 17 are conveniently annular-shaped and are applicable on hubs 3, 4 through reversible fitting members non (not illustrated in detail) for example of the snap-coupling type.

The auxiliary rollers may also advantageously be of the omni-directional type, as indicated in the references 18 in the figure 16.

The foldable wheel according to the invention is susceptible to various applications on vehicles of various kinds and types, both in the extended and collapsed condition.

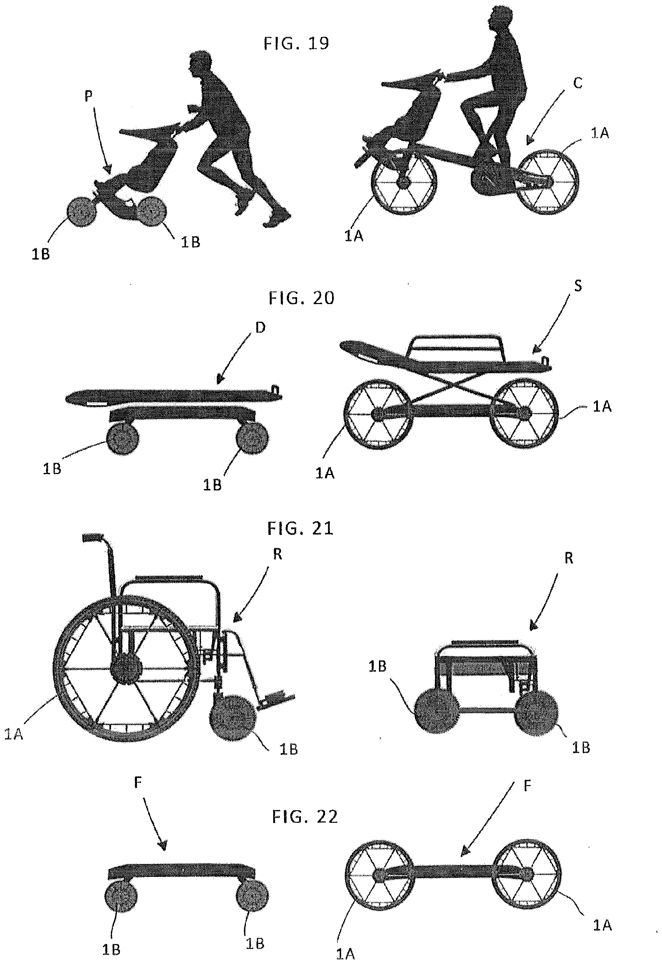

Thus, figure 17 shows the application of a pair of wheels, in extended condition 1A, to a bicycle B. In the case of figure 19 the same wheels 1A are applied to a bicycle C collapsible and transformable for example into a stroller P whose wheels 1B derive from the folding of the wheels 1A.

In the case of figure 20 the extended wheels 1A are applied to a first aid stretcher S, while the wheels in collapsed condition 1B are applied to a trolley D.

Figure 21 represents the application to a foldable wheelchair R, and figure 22 to a drone or robot trolley F.

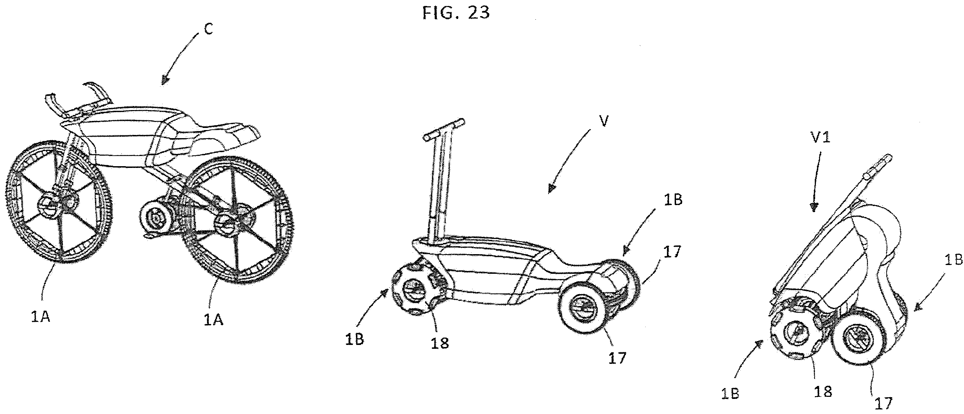

Figure 23 shows the transformation of a collapsible vehicle, for example made up of an electrically driven cycle C, in a vehicle V, in which the wheels in extended condition 1A of the cycle C are arranged in the collapsed condition 1B and they are also provided with auxiliary wheels 17 and 18. In addition, the vehicle V is further collapsible in the configuration indicated with V1.

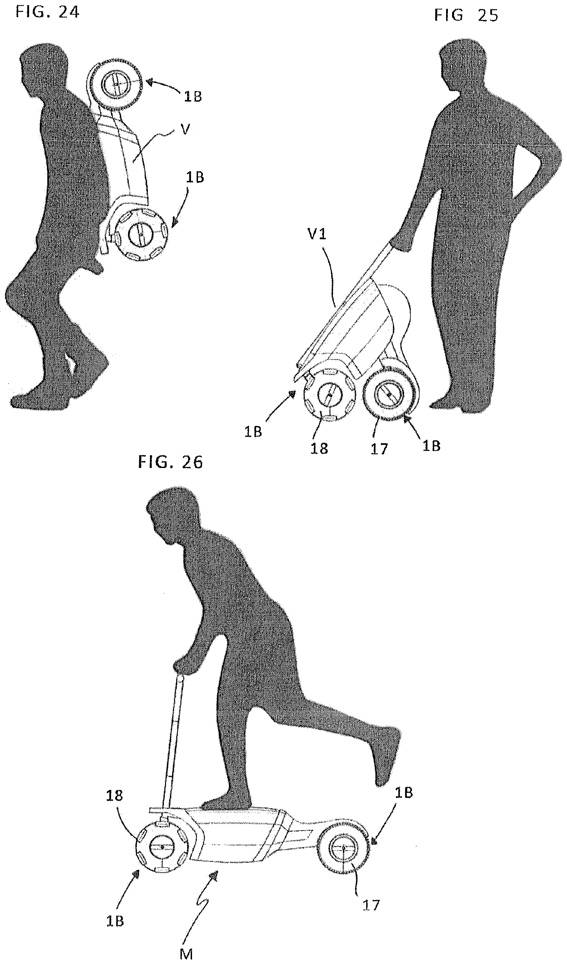

Figures 24 and 25 show how the motorised vehicle V can be comfortably carried on the shoulder and the collapsed motorised vehicle V1 moved like a trolley bag, and figure 26 shows the application of the wheels - in the collapsed condition and with the auxiliary rollers 17 and 18 - to a scooter M.

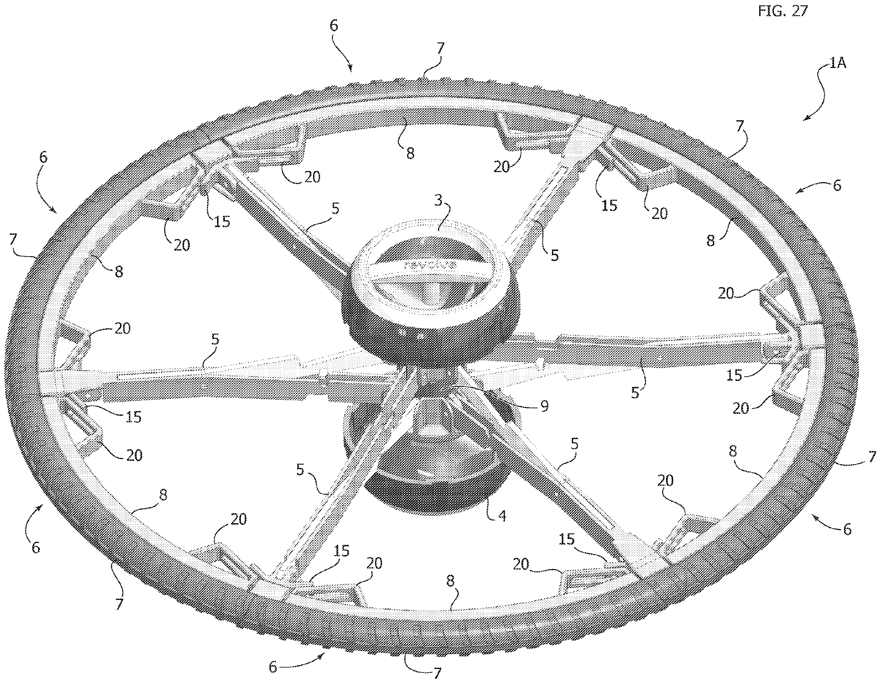

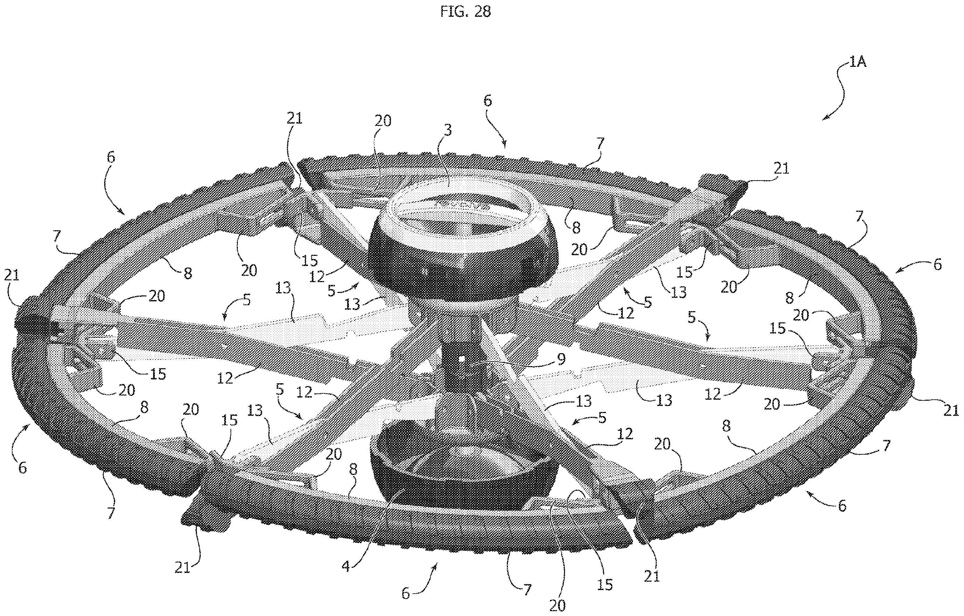

Figures 27-29, in which parts identical or similar to the ones described previously are indicated with the same reference numbers, show a variant of the foldable wheel according to the invention which is currently considered the preferred embodiment and differs from the solution described above substantially due to the following aspects.

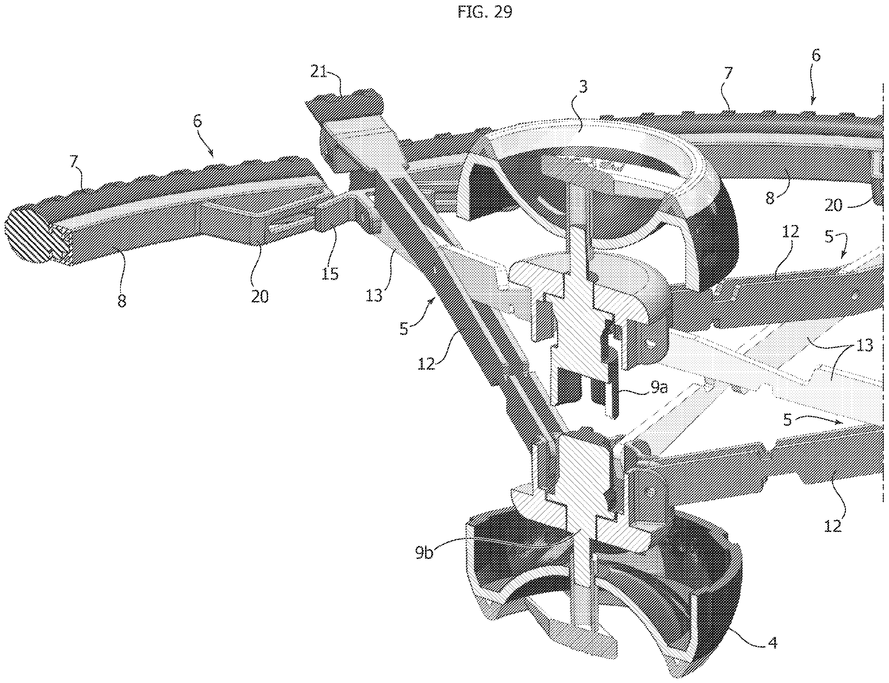

Firstly, the central shaft 9 on which the hubs 3, 4 are mounted is formed by two parts 9a, 9b axially separable from each other and each one of which is structured in an extensible and contractible telescopic fashion, as illustrated further in detail in figure 29. This solution enables advantageously further reducing the overall dimension of the wheel in the collapsed condition thereof due to the possibility of a greater capability to mutually move apart between the hubs 3 and 4.

Secondly, the locking members 15 cooperate with the guide tracks 20 fixed in the sectors 6 with the aim of making the rotational movement thereof between the extended and the collapsed conditions of the wheel more fluid.

Lastly, the spokes 5 are provided with projecting rubber lugs 21 suitable to be interposed, in the unfolded condition of the wheel, between every pair of contiguous sectors 6.

Figure 29 shows - partly in detail - the parts 9a, 9b of the shaft 9, the guides 20 and the lug 21. Further shown is the distinctive cross-section of the rubber potions 7 engaged with the relative supports 8 of the sectors 6.

Obviously, the described applications are just examples of the various possible uses of the foldable wheel according to the invention, whose construction details and embodiments may widely vary with respect to what has been described and illustrated, without departing from the scope of protection of the present invention as defined in the claims that follow.

Thus, for example to the hubs 3, 4 there may be associated lateral modules that can be disassembled for the application of the auxiliary wheels 17 or 18, as well as possible pedals. In addition, in order to guarantee maximum stability of the wheel in the collapsed condition, the spokes 5 may also be provided with respective locking members.

## Claims

1. A foldable wheel (1A) including a double hub (3, 4), a rim (2) formed of rubberised sectors (6), and spokes (5) pivotally connecting each hub (3, 4) with the sectors (6) of the rim (2), wherein the spokes (5) have a fixed length and the sectors (6) of the rim (2) are configurable, starting from an extended condition (1A) forming the rim (2) in which said hubs (3, 4) are set close to each other, in a collapsed condition (1B) in which said hubs (3, 4) are mutually spaced apart along the wheel axis (9) and said spokes (5) extend substantially parallel to the wheel axis (9), **characterized in that**
it comprises an axially extendable and contractible central shaft (9) bearing said two hubs (3, 4), **in that** the spokes (5) are pivoted to the hubs (3, 4) substantially on the wheel axis (9) and **in that** in said collapsed condition (1B) said sectors (6) of the rim (2) extend longitudinally between said two hubs (3, 4).

2. Foldable wheel according to claim 1, **characterized in that** the spokes are configured in groups (5) in which each group includes a first spoke (12) pivotally connecting one hub (3) with a sector (6) of the rim (2), and a second spoke (13) pivotally interconnecting the other hub (4) with said sector (6) of the rim (2) and is pivoted in a scissor-like fashion to the first spoke (12).

3. Foldable wheel according to claim 2, **characterized in that** the first and second spokes (12, 13) of each group (5) have respective radially outer ends provided with locking members (15, 16) of the relative sector (6) of the rim (2) with respect to the contiguous sectors (6) in the extended condition (1A) of the wheel.

4. Foldable wheel according to claim 2 or claim 3, **characterized in that** in the collapsed condition (1B) said spokes (12, 13) extend substantially parallel to the wheel axis (9) within said sectors (6) of the rim (2).

5. Foldable wheel according to one or more of the preceding claims, **characterized in that** in the collapsed condition (1B) it has a substantially roller-like configuration.

6. Foldable wheel according to any one of the preceding claims, **characterized in that** in the collapsed condition (1B) said two hubs (3, 4) are arranged to receive respective auxiliary lateral rollers (17).

7. Foldable wheel according to claim 6, **characterized in that** said auxiliary lateral rollers (18) are of the omni-directional type.

8. Foldable wheel according to one or more of the preceding claims, **characterised in that** said sectors (6) of the rim (2) are six.

9. Foldable wheel according to one or more of the preceding claims, **characterized in that** it equips in the extended condition (1A) a vehicle (B, C, P, S, D, R, F, M) having two or more wheels.

10. Foldable wheel according to one or more of the preceding claims, **characterized in that** it equips in the collapsed condition (1B) a vehicle having two or more wheels.

11. Foldable wheel according to claim 1, **characterised in that** said central shaft (9) is made up of two parts (9a, 9b) separable from each other.

12. Foldable wheel according to claim 3, **characterised in that** guide tracks (20) fixed into said sectors (6) are operatively associated to said locking means (15, 16).

13. Foldable wheel according to one or more of the preceding claims, **characterised in that** said spokes (5) are provided with rubber lugs (21) suitable to be interposed, in the unfolded condition of the wheel, between each pair of contiguous sectors (6).

14. A vehicle, **characterized in that** it is provided with foldable wheels according to one or more of the claims 1-10 in the extended condition (1A) and/or in the collapsed condition (1B).

## Patentansprüche

1. Ein zusammenklappbares Rad (1A), umfassend eine Doppelnabe (3, 4), eine Felge (2), die aus gummierten Sektoren (6) ausgebildet ist, und Speichen (5), die verschwenkbar jede Nabe (3, 4) mit den Sektoren (6) der Felge (2) verbinden, wobei die Speichen (5) eine feste Länge aufweisen und die Sektoren (6) der Felge (2), ausgehend von einem ausgeklappten Zustand (1A), in dem sie die Felge (2) ausbilden und die Naben (3, 4) nahe beieinander liegen, in einen zusammengeklappten Zustand (1B), in dem die Naben (3, 4) entlang der Radachse (9) voneinander beabstandet sind und die Speichen (5) sich im Wesentlichen parallel zu der Radachse (9) erstrecken, konfigurierbar ist, **dadurch gekennzeichnet, dass** es eine axial ausziehbare und zusammenziehbare mittige Welle (9) umfasst, welche die zwei Naben (3, 4) trägt, dass die Speichen (5) im Wesentlichen auf der Radachse (9) zu den Naben (3, 4) verschwenkt werden und dass in dem zusammengeklappten Zustand (1B) die Sektoren (6) der Felge (2) sich in Längsrichtung zwischen den zwei Naben (3, 4) erstrecken.

2. Zusammenklappbares Rad nach Anspruch 1, **dadurch gekennzeichnet, dass** die Speichen in Gruppen (5) konfiguriert sind, wobei jede Gruppe eine erste Speiche (12), die verschwenkbar eine Nabe (3) mit einem Sektor (6) der Felge (2) verbindet, und eine zweite Speiche (13), die verschwenkbar die andere Nabe (4) mit dem Sektor (6) der Felge (2) verbindet und in einer scherenartigen Weise zu der ersten Speiche (12) verschwenkt ist, umfasst.

3. Zusammenklappbares Rad nach Anspruch 2, **dadurch gekennzeichnet, dass** die erste und zweite Speiche (12, 13) jeder Gruppe (5) jeweilige radial äußere Enden aufweisen, die mit Verriegelungselementen (15, 16) des betreffenden Sektors (6) der Felge (2) bezogen auf die benachbarten Sektoren (6) in dem ausgeklappten Zustand (1A) des Rades versehen sind.

4. Zusammenklappbares Rad nach Anspruch 2 oder Anspruch 3, **dadurch gekennzeichnet, dass** in dem zusammengeklappten Zustand (1B) die Speichen (12, 13) sich im Wesentlichen parallel zu der Radachse (9) innerhalb der Sektoren (6) der Felge (2) erstrecken.

5. Zusammenklappbares Rad nach einem oder mehreren der vorangehenden Ansprüche, **dadurch gekennzeichnet, dass** es in dem zusammengeklappten Zustand (1B) eine im Wesentlichen rollenartige Konfiguration aufweist.

6. Zusammenklappbares Rad nach einem der vorangehenden Ansprüche, **dadurch gekennzeichnet, dass** in dem zusammengeklappten Zustand (1B) die zwei Naben (3, 4) dazu angeordnet sind, jeweilige seitliche Hilfsrollen (17) aufzunehmen.

7. Zusammenklappbares Rad nach Anspruch 6, **dadurch gekennzeichnet, dass** die seitlichen Hilfsrollen (18) vom omnidirektionalen Typ sind.

8. Zusammenklappbares Rad nach einem oder mehreren der vorangehenden Ansprüche, **dadurch gekennzeichnet, dass** die Anzahl der Sektoren (6) der Felge (2) sechs beträgt.

9. Zusammenklappbares Rad nach einem oder mehreren der vorangehenden Ansprüche, **dadurch gekennzeichnet, dass** es in dem ausgeklappten Zustand (1A) zur Ausstattung eines Fahrzeugs (B, C, P, S, D, R, F, M) mit zwei oder mehr Rädern gehört.

10. Zusammenklappbares Rad nach einem oder mehreren der vorangehenden Ansprüche, **dadurch gekennzeichnet, dass** es in dem zusammengeklappten Zustand (1B) zur Ausstattung eines Fahrzeugs mit zwei oder mehr Rädern gehört.

11. Zusammenklappbares Rad nach Anspruch 1, **dadurch gekennzeichnet, dass** die mittige Welle (9) aus zwei Teilen (9a, 9b) gebildet ist, die voneinander trennbar sind.

12. Zusammenklappbares Rad nach Anspruch 3, **dadurch gekennzeichnet, dass** den Verriegelungsmitteln (15, 16) Führungsschienen (20) wirkzugeordnet sind, die in die Sektoren (6) hinein befestigt sind.

13. Zusammenklappbares Rad nach einem oder mehreren der vorangehenden Ansprüche, **dadurch gekennzeichnet, dass** die Speichen (5) mit Gumminasen (21) versehen sind, die dazu geeignet sind, in dem auseinandergeklappten Zustand des Rades zwischen jedem Paar benachbarter Sektoren (6) angeordnet zu sein.

14. Fahrzeug, **dadurch gekennzeichnet, dass** es mit zusammenklappbaren Rädern nach einem oder mehreren der Ansprüche 1-10 in dem ausgeklappten Zustand (1A) und/oder in dem zusammengeklappten Zustand (1B) versehen ist.

## Revendications

1. Roue pliable (1A) comprenant un double moyeu (3, 4), une jante (2) formée avec des secteurs caoutchoutés (6) et des rayons (5) raccordant, de manière pivotante, chaque moyeu (3, 4) avec les secteurs (6) de la jante (2), dans laquelle les rayons (5) ont une longueur fixe et les secteurs (6) de la jante (2) peuvent être configurés, à partir d'une condition étendue (1A) formant la jante (2) dans laquelle lesdits moyeux (3, 4) sont à proximité l'un de l'autre, à une condition repliée (1B) dans laquelle lesdits moyeux (3, 4) sont mutuellement espacés le long de l'axe de roue (9) et lesdits rayons (5) s'étendent sensiblement parallèlement à l'axe de roue (9), **caractérisée en ce que** :
elle comprend un arbre central (9) axialement extensible et contractile supportant lesdits deux moyeux (3, 4), **en ce que** les rayons (5) sont pivotés vers les moyeux (3, 4) sensiblement sur l'axe de roue (9) et **en ce que**, dans ladite condition repliée (1B), lesdits secteurs (6) de la jante (2) s'étendent longitudinalement entre lesdits deux moyeux (3, 4).

2. Roue pliable selon la revendication 1, **caractérisée en ce que** les rayons sont configurés en groupes (5) dans lesquels chaque groupe comprend un premier rayon (12) raccordant, de manière pivotante, un moyeu (3) avec un secteur (6) de la jante (2), et un second rayon (13) interconnectant, de manière pivotante, l'autre moyeu (4) avec ledit secteur (6) de la jante (2) et est pivoté à la manière d'un ciseau vers le premier rayon (12).

3. Roue pliable selon la revendication 2, **caractérisée en ce que** les premier et second rayons (12, 13) de chaque groupe (5) ont des extrémités radialement externes respectives prévues avec des éléments de verrouillage (15, 16) du secteur (6) relatif de la jante (2) par rapport aux secteurs (6) contigus dans la condition étendue (1A) de la roue.

4. Roue pliable selon la revendication 2 ou la revendication 3, **caractérisée en ce que** dans la condition repliée (1B), lesdits rayons (12, 13) s'étendent sensiblement parallèlement à l'axe de roue (9) dans lesdits secteurs (6) de la jante (2).

5. Roue pliable selon une ou plusieurs des revendications précédentes, **caractérisée en ce que** dans la condition repliée (1B), elle a sensiblement une configuration de rouleau.

6. Roue pliable selon l'une quelconque des revendications précédentes, **caractérisée en ce que** dans la condition repliée (1B), lesdits deux moyeux (3, 4) sont agencés pour recevoir des rouleaux latéraux auxiliaires (17) respectifs.

7. Roue pliable selon la revendication 6, **caractérisée en ce que** lesdits rouleaux latéraux auxiliaires (18) sont de type omnidirectionnel.

8. Roue pliable selon une ou plusieurs des revendications précédentes, **caractérisée en ce que** lesdits secteurs (6) de la jante (2) sont au nombre de six.

9. Roue pliable selon une ou plusieurs des revendications précédentes, **caractérisée en ce qu'**elle équipe, dans la condition étendue (1A), un véhicule (B, C, P, S, D, R, F, M) ayant deux roues ou plus.

10. Roue pliable selon une ou plusieurs des revendications précédentes, **caractérisée en ce qu'**elle équipe, dans la condition repliée (1B), un véhicule ayant deux roues ou plus.

11. Roue pliable selon la revendication 1, **caractérisée en ce que** ledit arbre central (9) est composé de deux parties (9a, 9b) séparables l'une de l'autre.

12. Roue pliable selon la revendication 3, **caractérisée en ce que** des rails de guidage (20) fixés dans lesdits secteurs (6) sont associés, de manière opérationnelle, auxdits moyens de verrouillage (15, 16).

13. Roue pliable selon une ou plusieurs des revendications précédentes, **caractérisée en ce que** lesdits rayons (5) sont prévus avec des pattes en caoutchouc (21) appropriées pour être intercalées, dans la condition dépliée de la roue, entre chaque paire de secteurs (6) contigus.

14. Véhicule **caractérisé en ce qu'**il est prévu avec des roues pliables selon une ou plusieurs des revendications 1 à 10, dans la condition étendue (1A) et/ou dans la condition repliée (1B).
